# FASCICULE DE BREVET EUROPEEN

(11) **EP 1 955 018 B1**
(45) Date de publication et mention de la délivrance du brevet: **08.08.2012**
(21) Numéro de dépôt: 06807783.3
(22) Date de dépôt: 08.11.2006
(51) Int. Cl.: G01D 3/032, G01D 5/24, G01D 5/00

(54) **DISPOSITIF D'ACQUISITION NUMERIQUE D'UN SIGNAL DE MODULATION D'AMPLITUDE**
EINRICHTUNG ZUR DIGITALEN BESCHAFFUNG EINES AMPLITUDENMODULATIONSSIGNALS
DEVICE FOR THE DIGITAL ACQUISITION OF AN AMPLITUDE MODULATION SIGNAL

(30) Priorité: 02.12.2005 FR 0512260
(43) Date de publication de la demande: 13.08.2008
(73) Titulaire: Thales, 92200 Neuilly Sur Seine (FR)
(72) Inventeur: BOUYAT, Stéphane, F-86130 Saint Cyr (FR)
(74) Mandataire: Esselin, Sophie
(86) Numéro de dépôt international: PCT/EP2006/068249
(87) Numéro de publication internationale: WO 2007/062967

(56) Documents cités:
- FR-A- 892 018
- US-A- 4 910 476
- US-A- 6 154 634

## Description

L'invention est relative à un dispositif d'acquisition numérique d'un signal de modulation d'amplitude d'une porteuse. L'invention concerne également un procédé d'acquisition numérique d'un signal de modulation d'amplitude. L'invention trouve un intérêt particulier dans l'acquisition de signaux délivrés par des micro-capteurs de type capacitifs où tout autre composant qui produit une très faible modulation de l'amplitude d'une porteuse.

Pour acquérir des signaux analogiques délivrés par des micro-capteurs, on a recours à des dispositifs d'acquisition employant des capacités commutées ou un amplificateur de charge. Les dispositifs d'acquisition à capacités commutées constituent une première famille de dispositifs qui permettent de réaliser une mesure directe des charges électriques produites aux bornes d'un micro-capteur en utilisant des transferts de charges entre des bornes de capacités que ces dispositifs intègrent. Les dispositifs à capacités commutées peuvent être réalisés sur des ASIC (acronyme anglais pour Application-Specific Integrated Circuit). Les dispositifs appartenant à cette première famille sont dédiés à l'acquisition de signaux provenant d'un unique type de micro-capteur et sont par ailleurs, relativement onéreux à développer. Les dispositifs d'acquisition à amplificateur de charge constituent une deuxième famille de dispositifs qui apportent une solution technique simple pour acquérir de façon indirecte des signaux délivrés par des micro-capteurs. Pour ces dispositifs, l'acquisition consiste à mesurer une modulation d'amplitude produite sur une porteuse par des micro-capteurs, par exemple des micro-capteurs de type capacitif, qui créent, en réponse à un stimulus, une variation de capacité apparente produisant une modulation d'amplitude d'une porteuse. Les micro-gyromètres et les micro-accéléromètres gravés sur une plaque de silicium, embarqués à bord d'aéronef, sont des micro-capteurs de type capacitif.

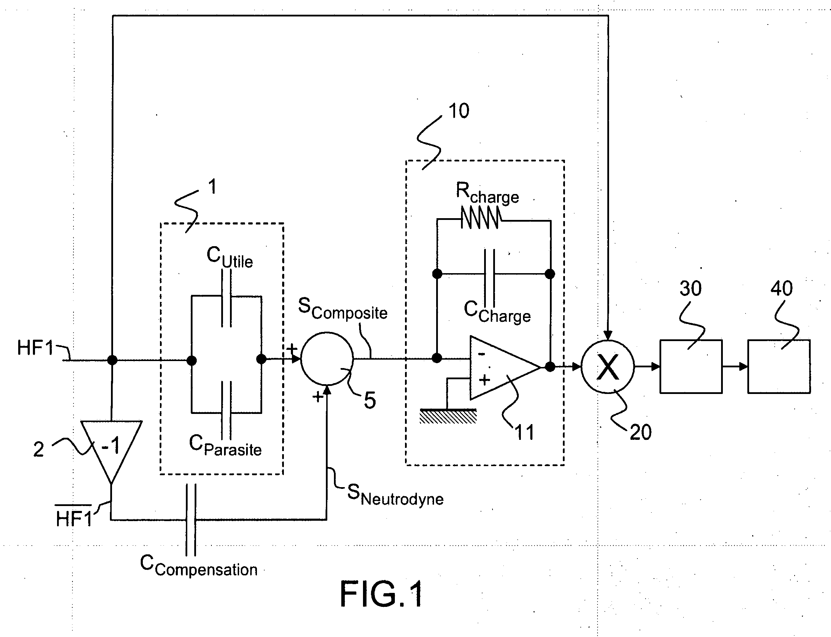

Au repos, c'est à dire lorsque aucun stimulus ne leur est appliqué, les micro-capteurs capacitifs présentent, à leurs bornes, une capacité de valeur non nulle dite « capacité parasite » que l'on note C_{Parasite}. On peut considérer, comme cela est représenté sur un schéma électronique équivalent d'un micro-capteur 1 en figure 1, que la capacité parasite est disposée en parallèle avec une deuxième capacité, dite capacité « utile » et notée C_{Utile}. Les évolutions de la capacité utile constituent une image du stimulus que l'on cherche à mesurer. Pour éviter de biaiser une mesure de la capacité utile, il est nécessaire de compenser les effets de la capacité parasite sur le signal délivré par le micro-capteur.

Une solution de l'état de la technique, connue sous le nom de neutrodynage, permet de réaliser une compensation initiale de la capacité parasite d'un micro-capteur. Elle consiste, lorsqu'une porteuse est injectée dans un micro-capteur, à additionner au signal délivré par le micro-capteur un signal dit de « neutrodynage » pour constituer un signal composite sur lequel des effets de la capacité parasite sont annulés ou sont très réduits. Le signal de neutrodynage possède une fréquence identique à celle de la porteuse, il est de plus, en opposition de phase avec la porteuse. L'amplitude du signal de neutrodynage est fixe, elle est déterminée à partir d'une estimation de la capacité parasite, pouvant résulter de calculs, de mesures, ou d'abaques. Le signal de neutrodynage peut être généré, par exemple, par une injection d'une porteuse en opposition de phase avec celle injectée dans le micro-capteur, dans une capacité dite de capacité de compensation et notée C_{Compensation}, dont la valeur est fixe et fondée sur une estimation de la valeur de la capacité parasite du micro-capteur.

La valeur de la capacité parasite d'un micro-capteur peut différer d'un exemplaire d'un micro-capteur à l'autre, de sorte que l'estimation de la capacité parasite nécessite des mesures préalables qui nuisent au caractère véritablement industriel du neutrodynage. Par ailleurs la valeur de la capacité parasite peut également varier en fonction de l'âge du micro-capteur, ce qui rend plus difficile encore également la correction de ses effets.

La figure 1 représente un dispositif d'acquisition de signal d'un micro-capteur capacitif selon l'état de la technique et mettant en oeuvre une méthode de neutrodynage.

Un micro-capteur 1 comporte une capacité utile Cᵤₜᵢₗₑ dont la valeur varie dans le temps et une capacité parasite Cₚₐᵣₐₛᵢₜₑ de valeur fixe. La variation de capacité utile atteint, par exemple, une amplitude de 0,01 pico-Farad (pF) à une fréquence par exemple de 10 kHz. La capacité parasite a une valeur, par exemple, égale à 10 pF.

On envoie une porteuse HF1 d'amplitude constante en entrée du micro-capteur, on recueille en sortie du micro-capteur une porteuse HF2 et on cherche à évaluer des effets des variations temporelles de la capacité utile Cᵤₜᵢₗₑ sur l'amplitude de la porteuse HF2 en s'affranchissant des effets de la capacité parasite Cₚₐᵣₐₛᵢₜₑ sur la porteuse HF2. Pour ce faire on emploie un signal de neutrodynage S_{Neutrodyne}, comme décrit plus haut.

Le signal de neutrodynage S_{Neutrodyne} est construit à partir de la porteuse HF1, d'un dispositif inverseur 2, et d'une capacité de compensation C_{Compensation}. Le signal en sortie de l'inverseur a une amplitude identique à celle du signal placé en entrée de l'inverseur, il est en opposition de phase avec le signal avec signal placé en entrée de l'inverseur et il est noté *̅H̅F̅*̅1̅.

Le signal de neutrodynage S_{Neutrodyne} est envoyé sur une première entrée d'un dispositif de sommation 5, la porteuse HF2 est envoyée sur une deuxième entrée du dispositif de sommation qui délivre sur une sortie un signal composite S_{Composite} comportant une somme de la porteuse HF2 et du signal de neutrodynage S_{Neutrodyne}. Le signal composite S_{Composite} alimente une première entrée inverseuse d'un amplificateur 11, une deuxième entrée non-inverseuse de l'amplificateur étant reliée à la masse électrique. Une sortie de l'amplificateur étant reliée à la sortie inverseuse au travers d'un pont parallèle comportant une résistance de charge R_{Charge} et une capacité de charge C_{Charge}. Un signal composite amplifié est délivré par la sortie de l'amplificateur qui est basse impédance.

Par la suite, le signal composite amplifié est démodulé, c'est à dire qu'il est multiplié par la porteuse HF1 au moyen d'un multiplicateur 20. Le signal délivré par le multiplicateur 20 est filtré au moyen d'un filtre passe-bas 30 pour constituer un signal en bande de base. Enfin, le signal en bande de base est échantillonné et numérisé, par exemple à une cadence de 100 KHz, dans le cas d'une porteuse HF1 à la fréquence de 250 kHz. Le dispositif d'échantillonnage et de numérisation peut être par exemple un convertisseur de type delta-sigma qui délivre un flot binaire (appelé en anglais bitstream) comportant par exemple des bits signés, à une cadence, par exemple égale à 100 MHz et constituant une mesure numérique de la modulation d'amplitude recherchée.

Cette description fait apparaître d'autres inconvénients présentés par les dispositifs d'acquisition de signaux appartenant à la famille des dispositifs « à amplification de charge » de l'état de la technique. Le dispositif d'acquisition de l'état de la technique décrit, agit très majoritairement sur des signaux analogiques, ce qui pose des problèmes en ce qui concerne le choix et l'approvisionnement de composants analogiques critiques composant le dispositif d'acquisition. C'est le cas par exemple pour l'amplificateur 11 et le multiplicateur 20 qui doivent être tous les deux des composants extrêmement performants et donc relativement onéreux. Par ailleurs, il est difficile d'intégrer ces composants dans un ASIC.

Le but de l'invention est de pallier ces inconvénients. Plus précisément, l'invention concerne un dispositif de mesure d'un signal de modulation d'amplitude d'une porteuse injectée dans un micro-capteur, le dispositif réalisant un neutrodynage actif intégré dans une boucle de conversion directe delta-sigma qui inclut également une démodulation de porteuse.

Plus précisément l'invention a pour objet un dispositif d'acquisition numérique d'un signal utile, le signal utile modulant l'amplitude d'une porteuse HF1, la porteuse HF1 possédant une fréquence et une phase connues, une modulation de l'amplitude de la porteuse par le signal utile constituant un signal à traiter, caractérisé en ce qu'il comporte :
- un dispositif de sommation (5) pour créer un signal composite à partir d'une somme du signal à traiter et d'un signal de neutrodynage, le signal de neutrodynage étant un produit de la porteuse HF1 et d'un coefficient de neutrodynage pouvant évoluer dans le temps réalisé par un dispositif amplificateur de gain commandé (6) ;
- un dispositif amplificateur de charge (10) pour amplifier le signal composite et pour produire un signal composite amplifié ;
- un dispositif de comparaison Quadrant QC (60) du signe du signal composite amplifié et du signe de la porteuse qui délivre un signal de comparaison ;
- un dispositif d'échantillonnage (70) pour produire un flot binaire à partir du signal de comparaison, le flot binaire constituant une image du signal utile ;
- un dispositif d'intégration (80) pour produire le coefficient de neutrodyriage, à partir du flot binaire.

Un dispositif d'acquisition selon l'invention permet de réaliser un neutrodynage actif, c'est à dire qu'il permet de compenser de façon automatique les effets induits par une capacité parasite du micro-capteur dont la valeur non nulle, n'a pas à être évaluée au préalable. Ceci facilite l'industrialisation de la réalisation des dispositifs d'acquisition et les rend insensibles à une dérive dans le temps de la valeur de la capacité parasite, cette dérive pouvant être causée, par exemple, par un vieillissement du micro-capteur ou encore par une exposition à un environnement thermique extrême du micro-capteur.

Parallèlement, le fonctionnement du dispositif d'acquisition selon l'invention conduit à asservir le signal délivré par le dispositif amplificateur de charge à un niveau qui est aussi proche de zéro que possible, ce qui permet de relâcher les contraintes relatives au produit gain-bande de ce composant.

Un dispositif d'acquisition selon l'invention permet également de réaliser une démodulation du signal produit par le micro-capteur sans recourir à un multiplicateur de type analogique dont la réalisation est délicate au sein d'un ASIC.

Enfin, le dispositif selon l'invention traite des signaux majoritairement sous une forme numériques, ce qui facilite une implantation du dispositif sur un ASIC et améliore la répétabilité de la mesure

D'autres caractéristiques et avantages de l'invention apparaîtront à la lecture de la description détaillée qui suit, faite à titre d'exemple non limitatif et en référence aux dessins annexés dans lesquels :
- la figure 1, déjà décrite, représente un schéma de principe d'un dispositif d'acquisition numérique d'un signal de modulation d'amplitude d'une porteuse appartenant à la famille « à amplification de charge » de l'état de la technique ;
- la figure 2 représente schématiquement un schéma de principe d'un dispositif d'acquisition numérique d'un signal de modulation d'amplitude d'une porteuse de la famille « à amplification de charge », selon l'invention ;

D'une figure à l'autre, les mêmes éléments sont repérés par les mêmes références.

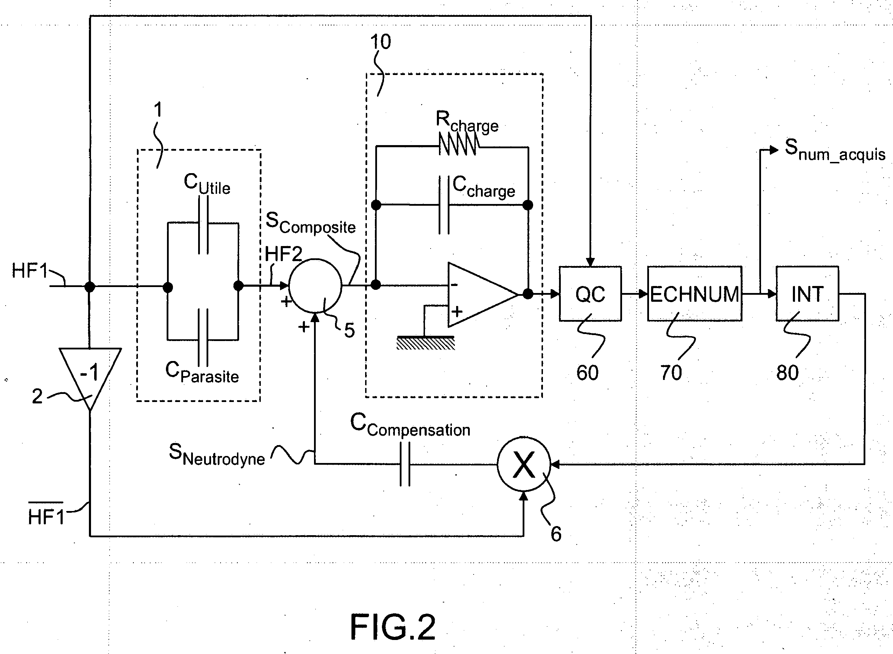

La figure 2 représente un schéma de principe d'un dispositif d'acquisition de signal de modulation d'amplitude selon l'invention. Le dispositif selon l'invention est employé pour mesurer une modulation d'amplitude d'une porteuse HF2 en sortie d'un micro-capteur 1 lorsqu'une une porteuse HF1 d'amplitude constante est appliquée en entrée du micro-capteur. La porteuse HF2 comporte d'une part un signal utile que l'on cherche à mesurer et d'autre part, un signal parasite d'amplitude stable dans le temps mais gênant la mesure du signal utile.

Avantageusement, le ratio de l'amplitude du signal utile et de l'amplitude du signal à traiter est supérieur ou égal à 10.

Avantageusement, le signal à traiter est généré par un capteur capacitif produisant une variation de capacité utile.

Le dispositif selon l'invention met en oeuvre un neutrodynage qui consiste à additionner un signal de neutrodynage S_{Neutrodyne} à la porteuse HF2 pour générer un signal composite S_{Composite}. Le signal de neutrodynage S_{Neutrodyne} alimente une première entrée d'un dispositif de sommation 5, la porteuse HF2 alimentant une deuxième entrée du dispositif 5. Le dispositif de sommation 5 délivre, sur une sortie, un signal composite S_{Composite} comportant une somme de la porteuse HF2 et du signal de neutrodynage S_{Neutrodyne}.

Une nouveauté de l'invention vient de ce que l'amplitude de S_{Neutrodyne} n'est pas nécessairement constante dans le temps. Le signal de neutrodynage S_{Neutrodyne} étant un signal recueilli en sortie d'une capacité de compensation C_{Compensation} dont la valeur ne résulte pas d'une mesure préalable, lorsqu'une porteuse auxiliaire est placée en entrée de la capacité de compensation.

La porteuse auxiliaire est construite à partir de la porteuse HF1, d'un inverseur 2 et d'un coefficient de neutrodynage. La porteuse auxiliaire est délivrée par un dispositif amplificateur de gain commandé 6. Une première entrée du dispositif amplificateur de gain commandé 6 est alimentée par un signal, noté *H̅F̅1̅*, qui est en opposition de phase avec la porteuse HF1 et qui possède une amplitude identique à celle de la porteuse HF1 Une deuxième entrée du dispositif 6 est alimentée par le coefficient de neutrodynage qui est délivré en sortie d'un intégrateur INT 80.

Selon l'invention, le signal composite alimente une entrée d'un dispositif amplificateur de charge 10 qui produit un signal composite amplifié qu'une boucle d'asservissement cherche à annuler.

Pour ce faire on compare tout d'abord le signe du signal composite amplifié et le signe de la porteuse HF1 au moyen d'un dispositif de comparaison Quadrant QC. Le dispositif de comparaison Quadrant QC est constitué uniquement de composant comparateurs et de portes numériques, il est alimenté sur une première entrée par la porteuse HF1 et sur une deuxième entrée par le signal composite amplifié. Le dispositif de comparaison Quadrant QC délivre un signal analogique de comparaison du signe de la porteuse HF1 et du signal composite amplifié.

Ce signal analogique de comparaison est échantillonné à la fréquence F_{scan} par un dispositif d'échantillonnage et de numérisation ECHNUM 70 et tamponné sur des valeurs +V_{ref} ou -V_{ref} selon la valeur du signal analogique de signe. Les valeurs +V_{ref} et -V_{ref} sont des valeurs qui ne dépendent pas du dispositif d'échantillonnage ECHNUM.

Le signal délivré par le dispositif d'échantillonnage et de numérisation ECHNUM constitue un flot binaire composé de bits signés, il fournit une mesure numérique du signal utile et donc de la variation temporelle de la capacité utile du micro-capteur 1.

La fréquence F_{scan} vaut par exemple 100 MHz pour une fréquence de porteuse valant par exemple 250 KHz.

Le flot binaire est envoyé vers l'intégrateur INT 80. Une sortie de l'intégrateur INT délivre un coefficient de neutrodynage pour commander le dispositif amplificateur de gain commandé 6.

Avantageusement, le dispositif amplificateur de gain commandé (6) est de type analogique Avantageusement, le dispositif amplificateur de gain commandé (6) est de type numérique.

Pour certaines applications réalisées avec des micro-capteurs de type capacitif, telles que la gyrométrie, ou l'accélérométrie, il est important de conserver un décalage de phase maîtrisé entre le signal délivré par le micro-capteur et celui qui est délivré par le dispositif d'acquisition.

Avantageusement, les dispositifs qu'il comporte produisent un décalage de phase fixe sur les signaux qui leur sont appliqués.

## Revendications

1. Dispositif d'acquisition numérique d'un signal utile, le signal utile modulant l'amplitude d'une porteuse HF1, la porteuse HF1 possédant une fréquence et une phase connues, une modulation de l'amplitude de la porteuse par le signal utile constituant un signal à traiter,
**caractérisé en ce qu'**il comporte :
- un dispositif de sommation (5) pour créer un signal composite à partir d'une somme du signal à traiter et d'un signal de neutrodynage, le signal de neutrodynage étant un produit de la porteuse HF1 et d'un coefficient de neutrodynage pouvant évoluer dans le temps réalisé par un dispositif amplificateur de gain commandé (6) ;
- un dispositif amplificateur de charge (10) pour amplifier le signal composite et pour produire un signal composite amplifié ;
- un dispositif de comparaison Quadrant QC (60) du signe du signal composite amplifié et du signe de la porteuse qui délivre un signal de comparaison ;
- un dispositif d'échantillonnage (70) pour produire un flot binaire à partir du signal de comparaison, le flot binaire constituant une image du signal utile ;
- un dispositif d'intégration (80) pour produire le coefficient de neutrodynage, à partir du flot binaire.

2. Dispositif selon la revendication 1 **caractérisé en ce que** le ratio de l'amplitude du signal utile et de l'amplitude du signal à traiter est supérieur ou égal à 10.

3. Dispositif l'une des revendications 1 ou 2 **caractérisé en ce que** le signal à traiter est généré par un capteur capacitif produisant une variation de capacité utile.

4. Dispositif selon l'une des revendications 1 ou 3 **caractérisé en ce que** le dispositif amplificateur de gain commandé (6) est de type analogique.

5. Dispositif selon l'une des revendications 1 ou 4 **caractérisé en ce que** le dispositif amplificateur de gain commandé (6) est de type numérique.

6. Dispositif selon l'une des revendications 1 ou 5 **caractérisé en ce que** les dispositifs qu'il comporte produisent un décalage de phase fixe sur les signaux qui leur sont appliqués.

## Claims

1. A device for the digital acquisition of a useful signal, said useful signal modulating the amplitude of a carrier HF1, said carrier HF1 having a known frequency and phase, a modulation of the amplitude of the carrier by the useful signal constituting a signal to be processed,
**characterised in that** it comprises:
an adding device (5) for creating a composite signal from a sum of the signal to be processed and a neutralising signal, said neutralising signal being a product of the carrier HF1 and a neutralising coefficient that can develop over time and is produced by a controlled gain amplifier device (6);
- a charge amplifier device (10) for amplifying the composite signal and for producing an amplified composite signal;
- a Quadrant comparison device QC (60) for comparing the sign of the amplified composite signal and the sign of the carrier that delivers a comparison signal;
- a sampling device (70) for producing a bitstream from the comparison signal, the bitstream constituting an image of the useful signal;
- an integration device (80) for producing the neutralising coefficient from the bitstream.

2. The device according to claim 1, **characterised in that** the ratio of the amplitude of the useful signal and the amplitude of the signal to be processed is greater than or equal to 10.

3. The device according to any one of claims 1 to 2, **characterised in that** the signal to be processed is generated by a capacitance sensor producing a useful capacitance variation.

4. The device according to claim 1 or 3, **characterised in that** the controlled gain amplifier device (6) is of the analogue type.

5. The device according to claim 1 or 4, **characterised in that** the controlled gain amplifier device (6) is of the digital type.

6. The device according to claim 1 or 5, **characterised in that** the devices that it comprises produce a fixed phase shift on the signals that are applied thereto.

## Patentansprüche

1. Vorrichtung zum digitalen Erfassen eines Nutzsignals, wobei das Nutzsignal die Amplitude eines Trägers HF1 moduliert, wobei der Träger HF1 eine bekannte Frequenz und Phase hat, wobei eine Modulation der Amplitude des Trägers durch das Nutzsignal ein zu verarbeitendes Signal ergibt,
**dadurch gekennzeichnet, dass** sie Folgendes umfasst:
- eine Addiervorrichtung (5) zum Erzeugen eines zusammengesetzten Signals von einer Summe aus dem zu verarbeitenden Signal und einem Neutralisierungssignal, wobei das Neutralisierungssignal ein Produkt aus dem Träger HF1 und einem Neutralisierungskoeffizienten ist, der sich im Laufe der Zeit entwickeln kann und von einer Verstärkungsvorrichtung (6) mit regulierter Verstärkung erzeugt wird;
- eine Ladungsverstärkervorrichtung (10) zum Verstärken des zusammengesetzten Signals und zum Erzeugen eines verstärkten zusammengesetzten Signals;
- eine Quadrant-Vorrichtung QC (60) zum Vergleichen des Vorzeichens des verstärkten zusammengesetzten Signals mit dem Vorzeichen des Trägers, der ein Vergleichssignal liefert;
- eine Abtastvorrichtung (70) zum Erzeugen eines Bitsroms von dem Vergleichssignal, wobei der Bitstrom ein Bild des Nutzsignals bildet;
- eine Integrationsvorrichtung (80) zum Erzeugen des Neutralisierungskoeffizienten von dem Bitstrom.

2. Vorrichtung nach Anspruch 1, **dadurch gekennzeichnet, dass** das Verhältnis zwischen der Amplitude des Nutzsignals und der Amplitude des zu verarbeitenden Signals gleich oder größer als 10 ist.

3. Vorrichtung nach Anspruch 1 oder 2, **dadurch gekennzeichnet, dass** das zu verarbeitende Signal von einem kapazitiven Sensor erzeugt wird, der eine Variation der Nutzkapazität erzeugt.

4. Vorrichtung nach Anspruch 1 oder 3, **dadurch gekennzeichnet, dass** die Verstärkervorrichtung (6) mit regulierter Verstärkung vom analogen Typ ist.

5. Vorrichtung nach Anspruch 1 oder 4, **dadurch gekennzeichnet, dass** die Verstärkervorrichtung (6) mit regulierter Verstärkung vom digitalen Typ ist.

6. Vorrichtung nach Anspruch 1 oder 5, **dadurch gekennzeichnet, dass** die darin enthaltenen Vorrichtungen eine feste Phasenverschiebung an den Signalen erzeugen, die daran angelegt werden.
